# EUROPEAN PATENT APPLICATION

(11) **EP 3 598 590 A1**
(43) Date of publication of application: **22.01.2020**
(21) Application number: 18768351.1
(22) Date of filing: 07.03.2018
(51) Int. Cl.: H01S 3/10, H04B 10/03, H04B 10/293

(54) **OPTICAL AMPLIFICATION MODULE AND OPTICAL AMPLIFICATION METHOD**

(30) Priority: 13.03.2017 JP 2017047432
(71) Applicant: NEC Corporation, Tokyo 108-8001 (JP)
(72) Inventor: TAKEUCHI, Takeshi, Tokyo 108-8001 (JP)
(74) Representative: Robson, Aidan John
(86) International application number: PCT/JP2018/008691
(87) International publication number: WO 2018/168593

(57) **Abstract**

[Problem] To provide an optical amplification module capable of amplifying an optical signal by efficiently using the optical power of excitation light. [Solution] This optical amplification module comprises: a light output means 1; a first optical coupling/splitting means 2; and a first optical amplifying means 3. The light output means 1 outputs light of a predetermined wavelength as excitation light. The first optical coupling/splitting means 2 splits the excitation light into first excitation light and second excitation light such that an optical power ratio becomes a predetermined ratio, and then couples the first excitation light with a first optical signal and outputs the result, and outputs the second excitation light to a different path from the first optical signal. The first optical amplifying means 3 amplifies and outputs the first optical signal.

## Description

### [Technical Field]

The present invention relates to a technique for amplifying an optical signal, and particularly, relates to a technique for amplifying an optical signal efficiently.

### [Background Art]

By development of an optical communication technology, an optical amplifier that amplifies optical power of an optical signal in a state of light is widely used. As the optical amplifier, for example, there is used an erbium doped optical fiber amplifier (EDFA) that amplifies optical power of an optical signal based on excitation light. The optical amplifier using the EDFA requires excitation light when amplifying optical power, and accordingly, is required to include a configuration of stably supplying excitation light. Moreover, the number of components including a laser element and other components should be small from a viewpoint of miniaturization of a device and the like, and desirably, the optical power of the optical signal can be amplified by efficiently using optical power of excitation light output from the laser element. Therefore, development regarding an optical amplification technique for efficiently amplifying optical power is performed. As such a technique for efficiently amplifying optical power, for example, a technique as in PTL 1 is disclosed.

PTL 1 relates to an optical amplifier that amplifies first signal light and second signal light, based on excitation light output from a single laser device. The optical amplifier of PTL 1 splits signal light to first signal light and second signal light, multiplexes either one of polarized components of the excitation light output from the laser device and the first signal light with each other, and multiplexes the other polarized component of the excitation light and the second signal light with each other. The first signal light and the second signal light, which are multiplexed with the excitation light, are amplified in optical amplifying fibers, based on the multiplexed excitation light. PTL 1 discloses that signal light can be amplified efficiently by performing optical amplification by using such a configuration as described above.

### [Citation List]

### [Patent Literature]

[PTL 1] Japanese Unexamined Patent Application Publication No. 2011-23532

### [Summary of Invention]

### [Technical Problem]

However, the technique in PTL 1 is not sufficient in the following aspect. The technique of PTL 1 amplifies the first signal light and the second signal light by using two polarized waves of the excitation light. Hence, in PTL 1, optical power of excitation light input for each optical amplifier cannot be adjusted. Accordingly, there may occur a situation where, while the optical power of the excitation light is sufficient in the amplifier that has received either of the polarized waves, the optical power of the excitation light is insufficient in the optical amplifier that has received the other polarized wave. In other words, in PTL 1, excitation light corresponding to optical power required for each optical amplifier cannot be supplied. Therefore, the technique of PTL 1 is not sufficient as a technique for performing optical amplification while making efficient use of optical power of excitation light.

In order to solve the above-described problem, an object of the present invention is to provide an optical amplification module capable of amplifying an optical signal by making efficient use of optical power of excitation light.

### [Solution to Problem]

In order to solve the above-described problem, an optical amplification module of the present invention includes optical output means, first optical coupling/splitting means, and first optical amplifying means. The optical output means outputs light with a predetermined wavelength as excitation light. The first optical coupling/splitting means splits the excitation light to first excitation light and second excitation light in such a way that an optical power ratio of the first excitation light and the second excitation light becomes a predetermined ratio, couples the first excitation light to a first optical signal and outputs the coupled first excitation light, and outputs the second excitation light to a path different from a path of the first optical signal. The first optical amplifying means amplifies the first optical signal, based on the excitation light coupled to the first optical signal, and outputs the amplified first optical signal.

An optical amplification method of the present invention outputs light with a predetermined wavelength as excitation light. The optical amplification method of the present invention splits the excitation light to first excitation light and second excitation light in such a way that an optical power ratio of the first excitation light and the second excitation light becomes a predetermined ratio, couples the first excitation light to a first optical signal and outputs the coupled first excitation light, and outputs the second excitation light to a path different from a path of the first optical signal to which the first excitation light is coupled. The optical amplification method of the present invention amplifies the first optical signal, based on the first excitation light coupled to the first optical signal, and outputs the amplified first optical signal.

### [Advantageous Effects of Invention]

According to the present invention, an optical signal can be amplified by making sufficient use of optical power of excitation light.

### [Brief Description of Drawings]

FIG. 1 is a diagram illustrating an overview of a configuration of a first example embodiment of the present invention.
FIG. 2 is a diagram illustrating an overview of a configuration of a second example embodiment of the present invention.
FIG. 3 is a diagram schematically illustrating a path of an optical signal in a wavelength division multiplexing (WDM) coupler of the second example embodiment of the present invention.
FIG. 4 is a diagram schematically illustrating a path of excitation light in the WDM coupler of the second example embodiment of the present invention.
FIG. 5 is a diagram illustrating an example of an optical amplification module with a configuration to be compared with that of the present invention.
FIG. 6 is a diagram schematically illustrating a path of an optical signal in the optical amplification module with the configuration to be compared with that of the present invention.
FIG. 7 is a diagram schematically illustrating a path of excitation light in the optical amplification module with the configuration to be compared with that of the present invention.
FIG. 8 is a diagram illustrating an overview of a configuration of a third example embodiment of the present invention.
FIG. 9 is a diagram illustrating an overview of a configuration of a fourth example embodiment of the present invention.
FIG. 10 is a diagram illustrating an overview of a configuration of a fifth example embodiment of the present invention.
FIG. 11 is a diagram illustrating an example of optical power of excitation light when a first laser element is stopped in the fifth example embodiment of the present invention.
FIG. 12 is a diagram illustrating an example of optical power of excitation light when a second laser element is stopped in the fifth example embodiment of the present invention.

### [Description of Embodiments]

### (First example embodiment)

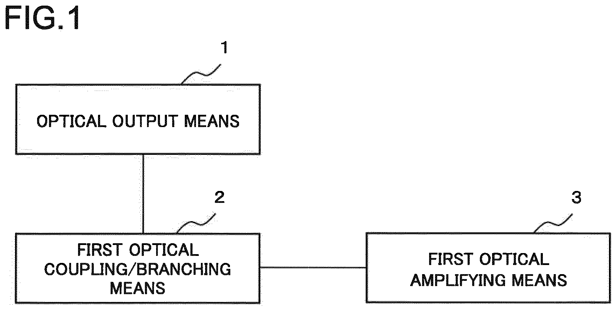

A first example embodiment of the present invention will be described in detail with reference to the drawings. FIG. 1 illustrates an overview of a configuration of an optical amplification module of the present example embodiment. The optical amplification module of the present example embodiment includes an optical output means 1, a first optical coupling/splitting means 2, and a first optical amplifying means 3. The optical output means 1 outputs light with a predetermined wavelength as excitation light. The first optical coupling/splitting means 2 splits the excitation light to first excitation light and second excitation light in such a way that an optical power ratio thereof becomes a predetermined ratio, couples the first excitation light to a first optical signal and outputs the first excitation light, and outputs the second excitation light to a path different from that of the first optical signal. The first optical amplifying means 3 amplifies the first optical signal based on the excitation light coupled thereto, and outputs the first optical signal.

The optical amplification module of the present example embodiment splits the excitation light to the first excitation light and the second excitation light in the predetermined optical power ratio in the first optical coupling/splitting means 2. Moreover, the optical amplification module of the present example embodiment amplifies the first optical signal based on the first excitation light, and outputs the second excitation light. Therefore, in the optical amplification module of the present example embodiment, the second excitation light further becomes usable for amplification and the like while splitting the first excitation light in such a way as to have optical power required for amplifying the first optical signal and using the split first excitation light for the amplification. As a result, the optical amplification module of the present example embodiment is able to amplify an optical signal by making efficient use of optical power of excitation light.

### (Second example embodiment)

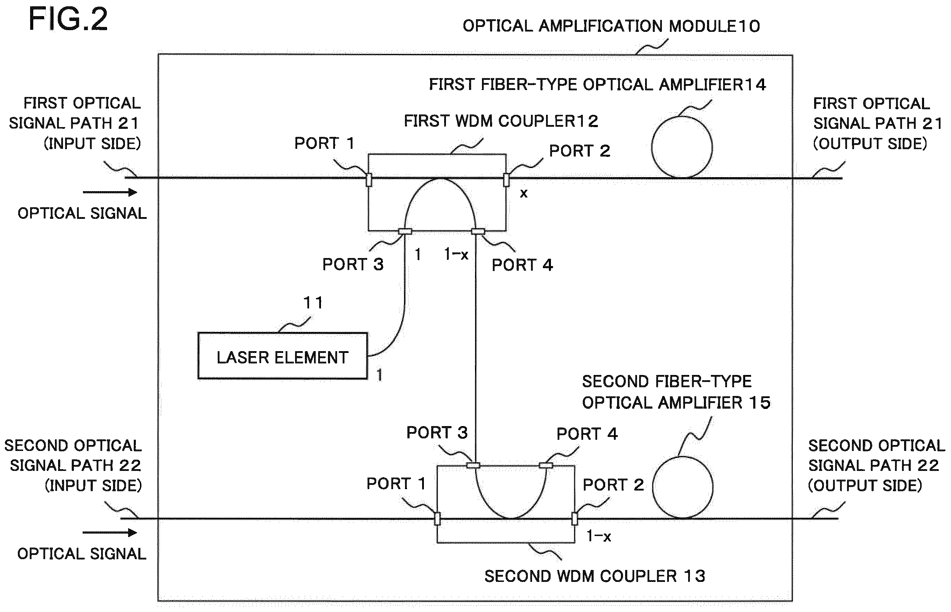

A second example embodiment of the present invention will be described in detail with reference to the drawings. FIG. 2 illustrates an overview of a configuration of an optical amplification module 10 of the present example embodiment. The optical amplification module 10 of the present example embodiment includes a laser element 11, a first wavelength division multiplexing (WDM) coupler 12, a second WDM coupler 13, a first fiber-type optical amplifier 14, and a second fiber-type optical amplifier 15. The optical amplification module 10 of the present example embodiment is installed on a first optical signal path 21 and a second optical signal path 22, and amplifies optical power of an optical signal transmitted through each of the optical signal paths.

The laser element 11 outputs excitation light for use when the power of the optical signal is amplified. The laser element 11 outputs light with a wavelength, which is to be used as excitation light when optical power of optical signals is amplified by the first fiber-type optical amplifier 14 and the second fiber-type optical amplifier 15. For example, the laser element 11 is composed of a semiconductor laser that outputs light in 1480 nm, which is to be used as excitation light when an optical signal in the 1550 nm band is amplified. Moreover, a function of the laser element 11 of the present example embodiment corresponds to that of the optical output means 1 of the first example embodiment.

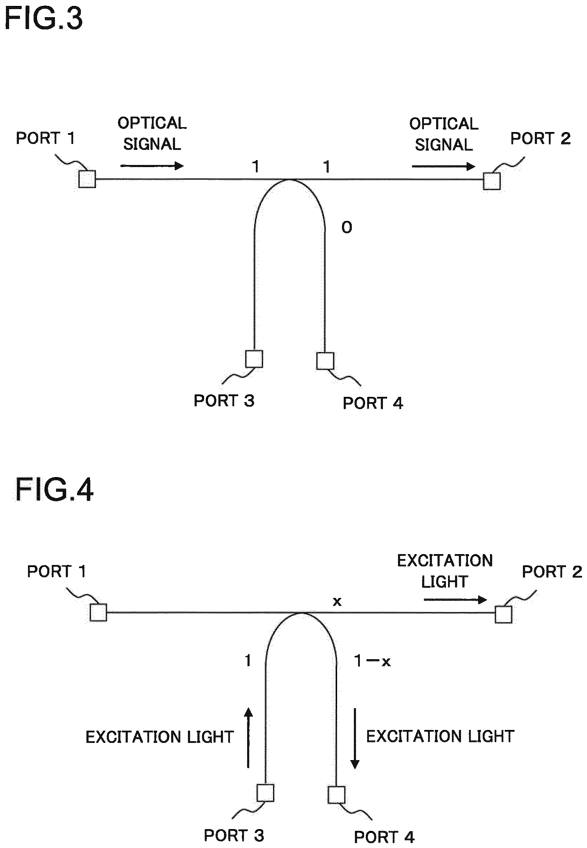

Each of the first WDM coupler 12 and the second WDM coupler 13 includes four ports, which are a port 1, a port 2, a port 3 and a port 4. FIGs. 3 and 4 schematically illustrate paths of the optical signal and the excitation light in the WDM coupler of the present example embodiment.

The optical signal transmitted through the first optical signal path 21 is input to the port 1 of the first WDM coupler 12. The optical signal input to the port 1 is output to the port 2 without being split. In other words, if it is assumed that a loss in the WDM coupler can be ignored, when the optical power of the optical signal input to the port 1 is "1", optical power of the optical signal output from the port 2 also becomes "I".

Moreover, the excitation light sent from the laser element 11 is input to the port 3 of the first WDM coupler 12. From the port 2 of the first WDM coupler 12, an optical signal acquired by multiplexing and coupling the optical signal input to the port 1 to a part of the excitation light input to the port 3 is output. Moreover, a part of the excitation light input to the port 3 is output from the port 4 of the first WDM coupler 12. For example, if it is assumed that a ratio of the optical power output from the port 2 in the optical power of the excitation light input to the port 3 is x (x is a positive number of 1 or less), then a ratio of the optical power of the excitation light output from the port 4 becomes (1-x). Moreover, a function of the first WDM coupler 12 of the present example embodiment corresponds to that of the first optical coupling/splitting means 2 of the first example embodiment.

The optical signal transmitted through the second optical signal path 22 is input to the port 1 of the second WDM coupler 13. Moreover, the excitation light output from the port 4 of the first WDM coupler 12 is input to the port 3 of the second WDM coupler 13. From the port 2 of the second WDM coupler 13, an optical signal acquired by multiplexing and coupling the optical signal input to the port 1 with the excitation light input to the port 3 is output.

The second WDM coupler 13 is set in such a way that the excitation light of all the optical power in the excitation light input to the port 3 is coupled to the optical signal and is output to the port 2. In other words, from the port 2 of the second WDM coupler 13, an optical signal acquired by multiplexing the optical signal, which is input to the port 1, with the excitation light of the optical power in the ratio of (1-x) in the optical power of the excitation light output from the laser element 11 is output. Moreover, an output portion of the port 4 of the second WDM coupler 13 is subjected to non-reflective treatment and is terminated.

Each of such optical fiber-type WDM couplers has a basic structure in which cores in partial portions of two optical fibers are brought close to each other. In the WDM coupler having such a configuration, a part of optical power that has seeped from one of the cores can be split to the other optical fiber by being transitioned thereto in a predetermined ratio. A split ratio can be designed by using, as parameters, a wavelength of an optical signal, a wavelength of excitation light, an inter-core distance at a portion where the cores are close to each other, and a length of the portion where the cores are brought close to each other. Therefore, based on the wavelength of the optical signal and the wavelength of the excitation light, the WDM coupler can be designed in such a way as to be split in a predetermined split ratio. The split ratio of the optical signal and the excitation light, which are input to each WDM coupler, is set by adjusting, for each wavelength, the length of the portion where the cores of two fibers which constitute the WDM coupler are close to each other and the inter-core distance.

The first fiber-type optical amplifier 14 and the second fiber-type optical amplifier 15 amplify the optical signals based on pieces of the excitation light. The first fiber-type optical amplifier 14 and the second fiber-type optical amplifier 15 are composed by using erbium doped optical fiber amplifiers (EDFAs). The first fiber-type optical amplifier 14 and the second fiber-type optical amplifier 15 amplify each of the optical power of the input optical signals by the EDFAs based on the excitation light, and output optical signals thus amplified. The first fiber-type optical amplifier 14 and the second fiber-type optical amplifier 15 may be those of which mode is other than the "erbium doped" as long as the mode is to amplify optical power by excitation light. Moreover, a function of the first fiber-type optical amplifier 14 of the present example embodiment corresponds to that of the first optical amplifying means 1 of the first example embodiment.

The first optical signal path 21 and the second optical signal path 22 are composed as optical signal transmission paths using optical fibers or the like.

Operations of the optical amplifiers of the present example embodiment will be described. The optical signals transmitted through the first optical signal path 21 and the second optical signal path 22 are individually input to the optical amplification module 10. The optical signal transmitted through the first optical signal path 21 is input to the port 1 of the first WDM coupler 12. Moreover, the optical signal transmitted through the second optical signal path 22 is input to the port 1 of the second WDM coupler 13.

The laser element 11 generates excitation light with a predetermined wavelength, and sends the generated excitation light to the port 3 of the first WDM coupler 12. The wavelength of the excitation light is set in such a way as to correspond to an optimal wavelength of the excitation light for use in amplifying the optical power of the optical signals in the EDFAs of the first fiber-type optical amplifier 14 and the second fiber-type optical amplifier 15.

When passing through the first WDM coupler 12, the excitation light input to the port 3 of the first WDM coupler 12 is split to two directions toward the port 2 and port 4 thereof in the optical power ratio of x:(1-x). The description below will be given on the assumption that excitation light with the optical power ratio of x with respect to the optical power of the excitation light input from the laser element 11 is split to the port 2 side, and that excitation light with the optical power ratio of (1-x) is split to the port 4 side.

The excitation light split to the port 2 side is multiplexed and coupled to the optical signal input from the port 1, and is output from the port 2. Moreover, the excitation light split to the port 4 side is output as it is from the port 4 without being multiplexed with the optical signal other than the same. In other words, from the port 4, the excitation light with the optical power ratio of (1-x) with respect to the optical power of the excitation light input from the laser element 11 is output.

The optical signal and the excitation light, which are output from the port 2, are input to the first fiber-type optical amplifier 14. When the excitation light is input to the first fiber-type optical amplifier 14, the optical power of the optical signal is amplified based on the excitation light. The optical signal amplified by the first fiber-type optical amplifier 14 is output to an output side of the first optical signal path 21, and is transmitted through the first optical signal path 21.

The excitation light output from the port 4 of the first WDM coupler 12 is input to the port 3 of the second WDM coupler 13. The excitation light input from the port 3 is split to the port 2 side. Moreover, the excitation light is not output to the port 4. In other words, the optical power of the excitation light split to the port 2 side becomes (1-x) of the optical power of the excitation light output from the laser element 11.

The excitation light split to the port 2 side is multiplexed and coupled to the optical signal input from the port 1, and is output from the port 2. Moreover, all the optical signal input from the port 1 is output to the port 2, and is not output to the port 4.

As described above, the optical signal input from the port 1 and the excitation light input from the port 3 are coupled to each other by the second WDM coupler 13, and are sent to the second iber-type optical amplifier 15. When the optical signal is input to the second fiber-type optical amplifier 15, the optical power of the optical signal is amplified based on the excitation light coupled thereto. The optical signal amplified by the second fiber-type optical amplifier 15 is output to an output side of the second optical signal path 22, and is transmitted through the second optical signal path 22.

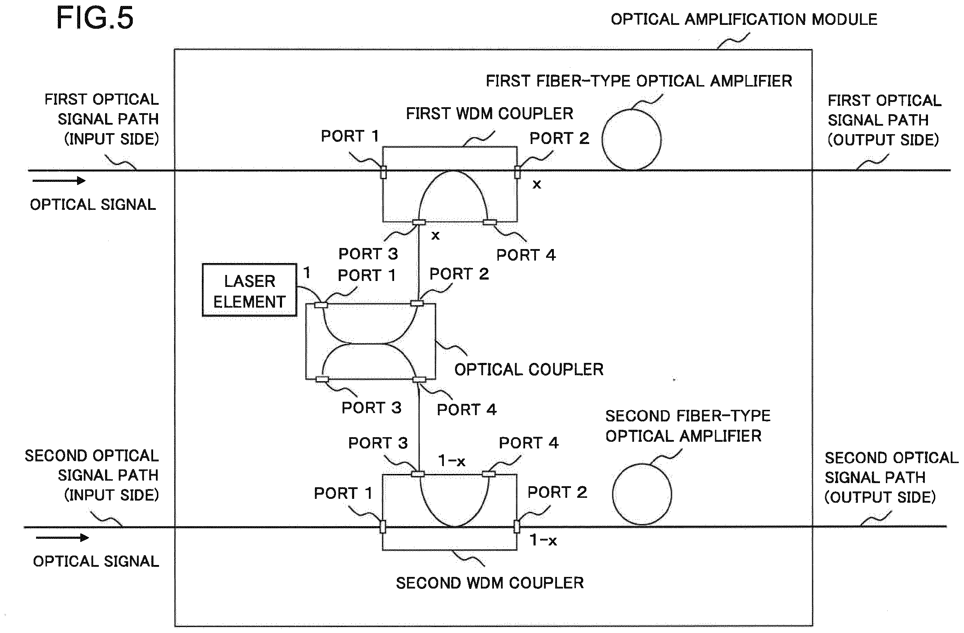

FIG. 5 illustrates an example of an optical amplification module with a configuration to be compared with that of the present invention. The optical amplification module of FIG. 5 includes an optical coupler that splits excitation light, which is output from a laser element, in such a way that a ratio of optical power thereof becomes x:(1-x). Pieces of the excitation light, which are split by the optical coupler, are sent to a first WDM coupler and a second WDM coupler, and are individually coupled to optical signals.

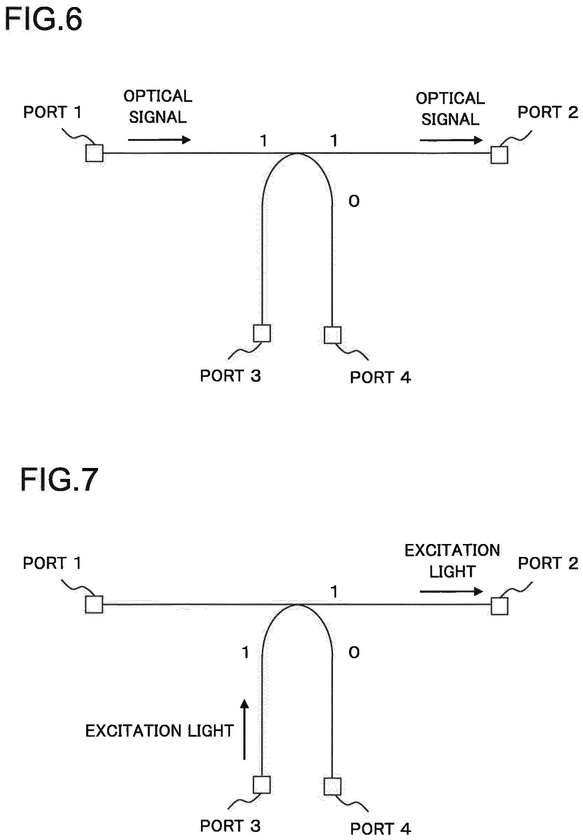

FIGs. 6 and 7 schematically illustrate paths of the optical signal and the excitation light in the WDM coupler of the optical amplification module having the configuration of FIG. 5. FIG. 6 illustrates a state where the optical signal input to a port 1 of the WDM coupler is output from a port 2 without being split. Moreover, FIG. 7 illustrates a state where all the excitation light input from a port 3 is transitioned to a port 2 side and is not output from a port 4. In the example of FIG. 5, pieces of the excitation light, which are split by the optical coupler, are individually subjected to the coupling in the WDM couplers, and based on the pieces of excitation light, which are thus subjected to the coupling, the optical signals are amplified in fiber-type optical amplifiers.

The configuration of FIG. 5 requires an optical coupler that splits excitation light in the ratio of 1:(1-x) and two WDM couplers when two optical signals are amplified by a single laser element. Meanwhile, the optical amplification module 10 of the present example embodiment inputs the excitation light, which is output from the laser element 11, to the first WDM coupler 12, and splits a part of the excitation light by the first WDM coupler 12 and inputs the split part to the second WDM coupler 13. Hence, the optical amplification module 10 of the present example embodiment can be simplified in terms of configuration more than the optical amplification module illustrated in FIG. 5.

The optical amplification module 10 of the present example embodiment inputs the excitation light, which is output from the laser element 11, to the first WDM coupler 12, couples a part of the input excitation light and the optical signal to each other, and outputs a part of the excitation light and the optical signal, which are thus input, to the first fiber-type optical amplifier 14. Moreover, the second WDM coupler 13 couples the excitation light, which is split by the first WDM coupler 12, and the optical signal to each other, and outputs the coupled excitation light and optical signal to the second fiber-type optical amplifier 15. Further, each of the fiber-type optical amplifiers amplifies the optical signal based on the excitation light coupled to the optical signal, and outputs the amplified optical signal.

As described above, the optical amplification module 10 of the present example embodiment sends, to the second WDM coupler 13, all the excitation light input to the first WDM coupler 12 other than the excitation light coupled to the optical signal, and couples the sent excitation light to the optical signal in the other path. Hence, the optical amplification module 10 of the present example embodiment uses all the excitation light, which is output from the laser element 11, for amplifying two optical signals, and accordingly, the optical signals can be amplified by efficiently using the excitation light.

Moreover, the split ratio of the optical power of the excitation light in the first WDM coupler 12 makes it possible to set the optical power ratio of the pieces of excitation light, which are supplied to the first fiber-type optical amplifier 14 and the second fiber-type optical amplifier 15. Therefore, the optical amplification module 10 of the present example embodiment can be used also when amplification amounts of the optical signals in the first fiber-type optical amplifier 14 and the second fiber-type optical amplifier 15 are different from each other. From the above, the optical amplification module 10 of the present example embodiment is able to amplify an optical signal by making efficient use of optical power of excitation light.

### (Third example embodiment)

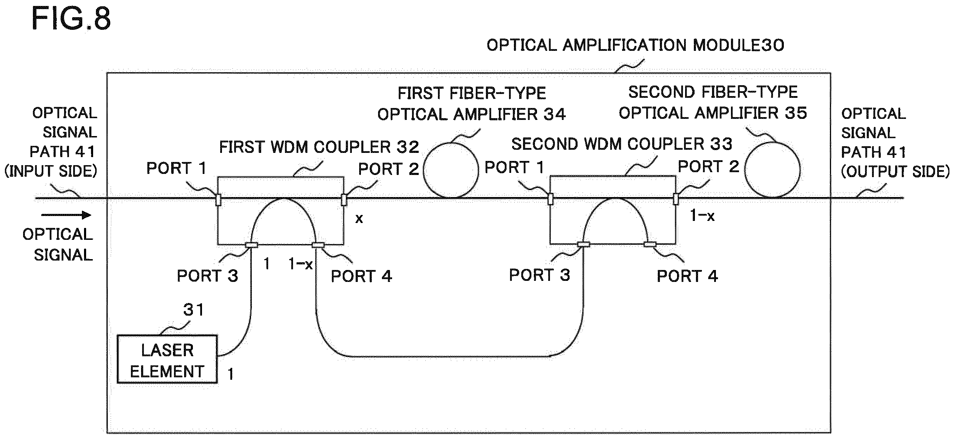

A third example embodiment of the present invention will be described in detail with reference to the drawings. FIG. 8 illustrates an overview of a configuration of an optical amplification module 30 of the present example embodiment. The optical amplification module 10 of the second example embodiment supplies excitation light from a single laser element to fiber-type optical amplifiers installed on two optical signal paths. The optical amplification module 30 of the present example embodiment is characterized in that, in place of such a configuration, a single laser element supplies excitation light to two fiber-type optical amplifiers installed on a single optical signal path.

The optical amplification module 30 of the present example embodiment includes a laser element 31, a first WDM coupler 32, a second WDM coupler 33, a first fiber-type optical amplifier 34, and a second fiber-type optical amplifier 35. The optical amplification module 30 is installed on an optical signal path 41, and amplifies and outputs optical power of an optical signal input thereto from the optical signal path 41.

Configurations and functions of the laser element 31, the first WDM coupler 32, the second WDM coupler 33, the first fiber-type optical amplifier 34 and the second fiber-type optical amplifier 35 in the present example embodiment are similar to those of regions having the same names in the second example embodiment.

Moreover, the configurations and functions of the first WDM coupler 32 and the second WDM coupler 33 in the present example embodiment are similar to those of the regions having the same names in the second example embodiment; however, two WDM couplers are disposed at serial positions via the first fiber-type optical amplifier 34. Moreover, another optical element may be provided at a preceding stage of the second WDM coupler 33 between the first fiber-type optical amplifier 34 and the second fiber-type optical amplifier 35.

The optical signal path 41 is composed as an optical signal transmission path using an optical fiber or the like.

Operations of the optical amplifiers of the present example embodiment will be described. The optical signal transmitted through the optical signal path 41 is input to the optical amplification module 30. The optical signal transmitted through the optical signal path 41 is input to a port 1 of the first WDM coupler 12.

The laser element 31 generates excitation light with a predetermined wavelength, and sends the excitation light to a port 3 of the first WDM coupler 32. The wavelength of the excitation light is set in such a way as to correspond to an optimal wavelength of the excitation light for use in amplifying the optical power of the optical signal in EDFAs of the first fiber-type optical amplifier 34 and the second fiber-type optical amplifier 35.

When passing through the first WDM coupler 32, the excitation light input to the port 3 of the first WDM coupler 32 is split to two directions toward a port 2 and a port 4 in an optical power ratio of x:(1-x). As in the second example embodiment, the description below will be given on the assumption that excitation light with the optical power ratio of x is split to the port 2 side, and that excitation light with the optical power ratio of (1-x) is split to the port 4 side.

The excitation light split to the port 2 side is multiplexed and coupled to the optical signal input to the port 1, and is output from the port 2. Moreover, the excitation light split to the port 4 side is output from the port 4 without being multiplexed with the optical signal other than the same.

The optical signal and the excitation light, which are output from the port 2, are input to the first fiber-type optical amplifier 34. When the excitation light is input to the first fiber-type optical amplifier 34, the optical power of the optical signal is amplified based on the excitation light. The optical signal amplified by the first fiber-type optical amplifier 34 is output from the first fiber-type optical amplifier 34, and is sent to the second WDM coupler 33.

The excitation light output from the port 4 of the first WDM coupler 32 is input to a port 3 of the second WDM coupler 33. All the excitation light input from the port 3 is transitioned to the port 2 side. Hence, the excitation light is not output from the port 4.

The excitation light transitioned to the port 2 side is multiplexed and coupled to the optical signal input from the port 1, and is output from the port 2. All the optical signal input from the port 1 is output to the port 2, and is not output to the port 4.

The optical signal input from the port 1 and the excitation light input from the port 3 are multiplexed and coupled to each other by the second WDM coupler 33, and are sent to the second fiber-type optical amplifier 35. When the excitation light is input to the second fiber-type optical amplifier 35, the optical power of the optical signal is amplified based on the excitation light. The optical signal amplified by the second fiber-type optical amplifier 35 is output to an output side of the optical signal path 41, and is transmitted through the optical signal path 41.

The optical amplification module 30 of the present example embodiment uses the optical power in the ratio of x in the excitation light, which is output from the laser element 31, for the amplification of the optical signal in the first fiber-type optical amplifier 34, and uses the optical power in the ratio of 1-x in the excitation light for the amplification of the optical signal in the second fiber-type optical amplifier 35. Hence, the optical amplification module 30 of the present example embodiment is able to increase an amplification factor of the optical power by the amplification in the fiber-type optical amplifiers installed at two stages while using all the optical power of the excitation light output from the laser element 31. Therefore, the optical amplification module 30 of the present example embodiment is able to amplify an optical signal by making efficient use of optical power of excitation light.

### (Fourth example embodiment)

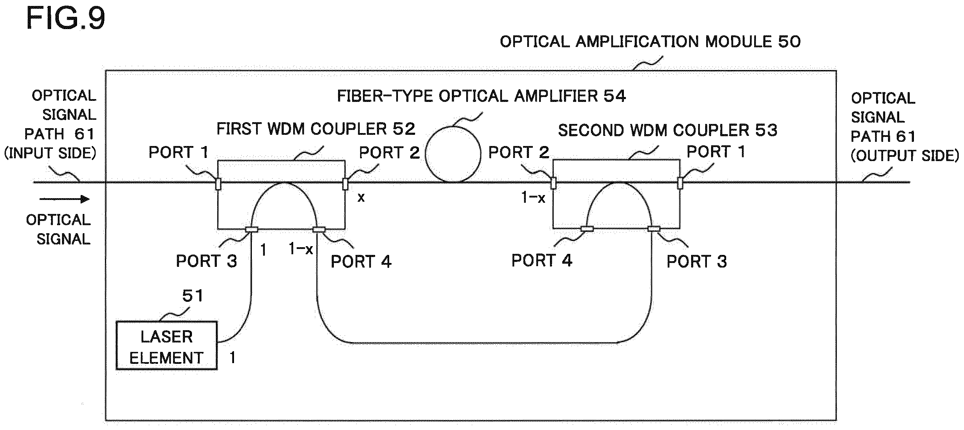

A fourth example embodiment of the present invention will be described in detail with reference to the drawings. FIG. 9 illustrates an overview of a configuration of an optical amplification module 50 of the present example embodiment. In the third example embodiment, two fiber-type optical amplifiers are connected in series to each other, and to each thereof, the excitation light coupled to the optical signal is sent from one direction. Meanwhile, the present example embodiment is characterized in that excitation light is sent from both directions of a single fiber-type optical amplifier.

The optical amplification module 50 of the present example embodiment includes a laser element 51, a first WDM coupler 52, a second WDM coupler 53, and a fiber-type optical amplifier 54. The optical amplification module 50 is installed on an optical signal path 61, and amplifies and outputs optical power of an optical signal input thereto from the optical signal path 61.

Configurations of the laser element 51, the first WDM coupler 52 and the second WDM coupler 53 in the present example embodiment are similar to those of regions having the same names in the second example embodiment. Moreover, a configuration of the fiber-type optical amplifier 54 of the present example embodiment is similar to that of the first fiber-type optical amplifier 14 of the second example embodiment.

The second WDM coupler 53 of the present example embodiment is provided in such a way that an optical signal sent from the fiber-type optical amplifier 54 is input to a port 2 thereof. The excitation light split by the first WDM coupler 52 and sent therefrom is input from a port 3 of the second WDM coupler 53. In other words, to the second WDM coupler 53, the optical signal and the excitation light are input in an opposite direction of each other.

The optical signal path 61 is composed as an optical signal transmission path using an optical fiber or the like.

Operations of the optical amplification module 50 of the present example embodiment will be described. The optical signal transmitted through the optical signal path 61 is input to the optical amplification module 50. The optical signal input from the optical signal path 61 to the optical amplification module 50 is input to a port 1 of the first WDM coupler 52.

The laser element 51 generates excitation light with a predetermined wavelength, and sends the generated excitation light to a port 3 of the first WDM coupler 52. The wavelength of the excitation light is set in such a way as to correspond to an optimal wavelength of the excitation light for use in amplifying the optical power of the optical signal in an EDFA of the fiber-type optical amplifier 54.

When passing through the first WDM coupler 52, the excitation light input to the port 3 of the first WDM coupler 52 is split to two directions toward a port 2 and port 4 thereof in the optical power ratio of x:(1-x). As in the second example embodiment, the description below will be given on the assumption that excitation light with the optical power ratio of x is split to the port 2 side, and that excitation light with the optical power ratio of (1-x) is split to the port 4 side.

The excitation light split to the port 2 side is multiplexed and coupled to the optical signal input from the port 1, and is output from the port 2. Moreover, the excitation light split to the port 4 side is output as it is from the port 4 without being multiplexed with the optical signal other than the same.

The optical signal and the excitation light, which are output from the port 2, are input to the fiber-type optical amplifier 54. When the excitation light is input to the fiber-type optical amplifier 54, the optical power of the optical signal is amplified based on the excitation light.

The excitation light output from the port 4 of the first WDM coupler 52 is input to a port 3 of the second WDM coupler 53. All the excitation light input from the port 3 is transitioned to the port 2 side. Hence, the excitation light is not output from the port 4.

The excitation light transitioned to the port 2 side is output from the port 2 of the second WDM coupler 53, and is sent to the fiber-type optical amplifier 54. When the excitation light sent from the port 2 of the second WDM coupler 53 is input to the fiber-type optical amplifier 54, the optical power of the optical signal sent from the opposite side thereto is further amplified based on the excitation light sent from the second WDM coupler 53.

The optical signal of which optical power is amplified by the excitation light input from both directions is output from the fiber-type optical amplifier 54 to the second WDM coupler 53. The optical signal sent from the fiber-type optical amplifier 54 is input to the port 2 of the second WDM coupler 53. The optical signal input from the port 2 of the second WDM coupler 53 is output as it is to the port 1 side. The optical signal output from the port 1 of the second WDM coupler 53 is output to an output side of the optical signal path 61, and is transmitted through the optical signal path 61.

In the first WDM coupler 52, the optical amplification module 50 of the present example embodiment splits the excitation light, which is output from the laser element 51, in such a way that the optical power ratio becomes x:1-x, couples the excitation light in the optical power ratio of x to the optical signal, and supplies this excitation light, which is coupled to the optical signal, as one for use in forward excitation to the fiber-type optical amplifier 54. Moreover, the optical amplification module 50 of the present example embodiment inserts the excitation light, which has the optical power ratio of 1-x and is split in the first WDM coupler 52, into the path of the optical signal in the second WDM coupler 53, and supplies the excitation light as one for use in backward excitation to the fiber-type optical amplifier 54. In other words, the optical amplification module 50 of the present example embodiment uses all the optical power of the excitation light, which is output from the laser element 51, for bidirectional excitation in the single fiber-type optical amplifier 54. Therefore, the optical amplification module 50 of the present example embodiment is able to increase an amplification factor of an optical signal while making efficient use of optical power of excitation light. As a result, the optical amplification module 50 of the present example embodiment is able to amplify an optical signal by making efficient use of optical power of excitation light.

### (Fifth example embodiment)

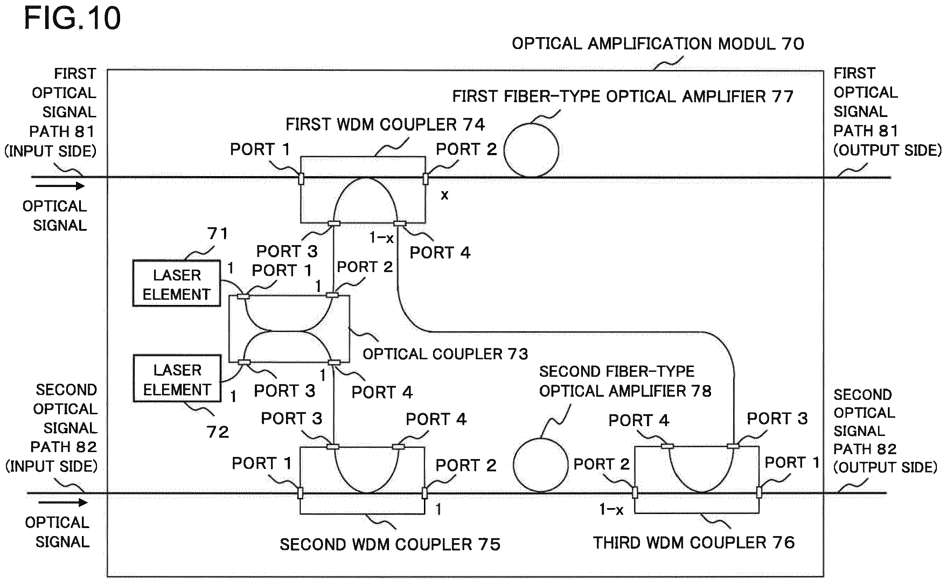

A fifth example embodiment of the present invention will be described in detail with reference to the drawings. FIG. 10 illustrates an overview of a configuration of an optical amplification module 70 of the present example embodiment. In each of the second to fourth example embodiments, excitation light is output from a single laser element. Meanwhile, the present example embodiment is characterized in that a light source of excitation light is made redundant by outputting excitation light from two laser elements.

The optical amplification module 70 of the present example embodiment includes a first laser element 71, a second laser element 72, an optical coupler 73, a first WDM coupler 74, a second WDM coupler 75, and a third WDM coupler 76. Moreover, the optical amplification module 70 of the present example embodiment includes a first fiber-type optical amplifier 77 and a second fiber-type optical amplifier 78. The optical amplification module 70 is installed on a first optical signal path 81 and a second optical signal path 82, and amplifies and outputs each of optical power of optical signals individually input from the respective optical signal paths.

Configurations and functions of the first laser element 71 and the second laser element 72 in the present example embodiment are similar to those of the laser element 11 of the second example embodiment. Each of the first WDM coupler 74, the second WDM coupler 75 and the third WDM coupler 76 splits excitation light, which is input from any port thereof, in an optical power ratio predetermined for each WDM coupler, and outputs the split excitation light to other ports. Moreover, a configuration of each of the first fiber-type optical amplifier 77 and the second fiber-type optical amplifier 78 in the present example embodiment and a function of each thereof as a single body are similar to those of the first fiber-type optical amplifier 14 of the second example embodiment.

The first laser element 71 and the second laser element 72 are disposed in such a way that pieces of light, which are individually output thereby, are input to a port 1 and a port 3 of the optical coupler 73. Moreover, the number of laser elements may be three or more. When the number of laser elements is set to three or more, optical couplers of which number is caused to correspond thereto are used.

The optical coupler 73 is a four-port optical coupler with a split ratio of 1:1. The optical coupler 73 couples pieces of excitation light, which are input from the first laser element 71 and the second laser element 72 via the port 1 and port 3 thereof, to each other. Moreover, the optical coupler 73 splits the coupled excitation light to two pieces, and outputs the split pieces of excitation light via a port 2 and port 3 thereof to paths toward the first WDM coupler 74 and the second WDM coupler 75. The optical coupler 73 splits the excitation light to the paths toward the first WDM coupler 74 and the second WDM coupler 75 in such a way that an optical power ratio of the excitation light becomes 1:1.

The first WDM coupler 74 is connected in such a way that an optical signal transmitted through the first optical signal path 81 is input to a port 1 thereof, and that the excitation light sent from the port 2 of the optical coupler 73 is input to a port 3 thereof. Moreover, the first WDM coupler 74 is connected in such a way that an optical signal and the excitation light, which are output from a port 2 thereof, are input to the first fiber-type optical amplifier 77. Further, the first WDM coupler 74 is connected in such a way that the excitation light output from a port 4 thereof is input to a port 3 of the third WDM coupler 76.

The second WDM coupler 75 is connected in such a way that an optical signal transmitted through the second optical signal path 82 is input to a port 1 thereof, and that the excitation light sent from the port 4 of the optical coupler 73 is input to a port 3 thereof. Moreover, the second WDM coupler 75 is connected in such a way that an optical signal and the excitation light, which are output from a port 2 thereof, are input to the second fiber-type optical amplifier 78.

The third WDM coupler 76 is connected in such a way that the optical signal sent from the second fiber-type optical amplifier 78 is input to a port 2 thereof, and that the excitation light sent from the port 4 of the first WDM coupler 74 is input to a port 3 thereof. Moreover, the third WDM coupler 76 is connected in such a way that the optical signal input thereto from the port 2 is output to a port 1 thereof, and that the excitation light input thereto from the port 3 is output from the port 2.

The first fiber-type optical amplifier 77 is connected in such a way that the optical signal and the excitation light are input thereto from the first WDM coupler 74. Moreover, the first fiber-type optical amplifier 77 is connected in such a way that an optical signal output thereby is output to an output side of the first optical signal path 81.

The second fiber-type optical amplifier 78 is connected in such a way that the optical signal and the excitation light are input thereto from the port 2 of the second WDM coupler 75. Moreover, the second fiber-type optical amplifier 78 is connected in such a way that the excitation light is input thereto from the port 2 of the third WDM coupler 76, and that the optical signal output thereby is sent to the port 2 of the third WDM coupler 76.

The first optical signal path 81 and the second optical signal path 82 are composed as optical signal transmission paths using optical fibers or the like.

Operations of the optical amplification module 70 of the present example embodiment will be described. The optical signals transmitted through the first optical signal path 81 and the second optical signal path 82 are input to the optical amplification module 70. The optical signals input from the first optical signal path 81 and the second optical signal path 82 to the optical amplification module 70 are input respectively to the ports 1 of the first WDM coupler 74 and the second WDM coupler 75.

The first laser element 71 and the second laser element 72 generate pieces of excitation light with predetermined wavelengths, and send the generated pieces of excitation light to the port 1 and port 3 of the optical coupler 73. The wavelengths of the pieces of excitation light are set in such a way as to correspond to optimal wavelengths of the excitation light for use in amplifying the optical power of the optical signals in EDFAs of the respective fiber-type optical amplifiers.

Upon receiving the pieces of excitation light from the first laser element 71 and the second laser element 72, the optical coupler 73 couples the pieces of excitation light, which are input from the two laser elements, to each other, and splits the excitation light in such a way that the optical power ratio thereof becomes 1:1. The optical coupler 73 sends the split pieces of excitation light to the first WDM coupler 74 and the second WDM coupler 75 via the port 2 and the port 4.

When passing through the first WDM coupler 74, the excitation light input from the optical coupler 73 to the port 3 of the first WDM coupler 74 is split to two directions toward the port 2 and the port 4 in the optical power ratio of x:(1-x). As in the second example embodiment, the description below will be given on the assumption that excitation light with the optical power ratio of x is split to the port 2 side, and that excitation light with the optical power ratio of (1-x) is split to the port 4 side.

The excitation light split to the port 2 side is multiplexed and coupled to the optical signal input from the port 1, and is output from the port 2. Moreover, the excitation light split to the port 4 side is output as it is from the port 4 without being multiplexed with the optical signal other than the same.

The optical signal and the excitation light, which are output from the port 2, are input to the first fiber-type optical amplifier 77. When the excitation light is input to the first fiber-type optical amplifier 77, the optical power of the optical signal is amplified based on the excitation light. The optical signal amplified by the first fiber-type optical amplifier 77 is output to an output side of the first optical signal path 81, and is transmitted through the first optical signal path 81.

The excitation light output from the port 4 of the first WDM coupler 74 is input to the port 3 of the third WDM coupler 76. All the excitation light input from the port 3 is transitioned to the port 2 side. Hence, the excitation light is not output from the port 4. The excitation light transitioned to the port 2 side is output from the port 2 of the third WDM coupler 76, and is sent to the second fiber-type optical amplifier 78.

When passing through the second WDM coupler 75, all the excitation light input from the optical coupler 73 to the port 3 of the second WDM coupler 75 is transitioned to the port 2 side. Hence, the excitation light is not output from the port 4. The excitation light transitioned to the port 2 side is multiplexed and coupled to the optical signal input from the port 1, and is output from the port 2.

The optical signal and the excitation light, which are output from the port 2, are input to the second fiber-type optical amplifier 78. When the excitation light is coupled to the optical signal and input to the second fiber-type optical amplifier 78, the optical power of the optical signal is amplified based on the excitation light coupled thereto.

Moreover, the excitation light sent from the port 2 of the third WDM coupler 76 is input to the second fiber-type optical amplifier 78 from an opposite direction of the optical signal, and accordingly, the optical signal is amplified by also the excitation light sent from the third WDM coupler 76.

The optical signal of which optical power is amplified by the excitation light input from both directions is output from the second fiber-type optical amplifier 78 to the third WDM coupler 76. The optical signal sent from the second fiber-type optical amplifier 78 is input to the port 2 of the third WDM coupler 76. The optical signal input to the port 2 of the third WDM coupler 76 is output as it is to the port 1 side. The optical signal output from the port 1 of the third WDM coupler 76 is output to an output side of the second optical signal path 82, and is transmitted through the second optical signal path 82.

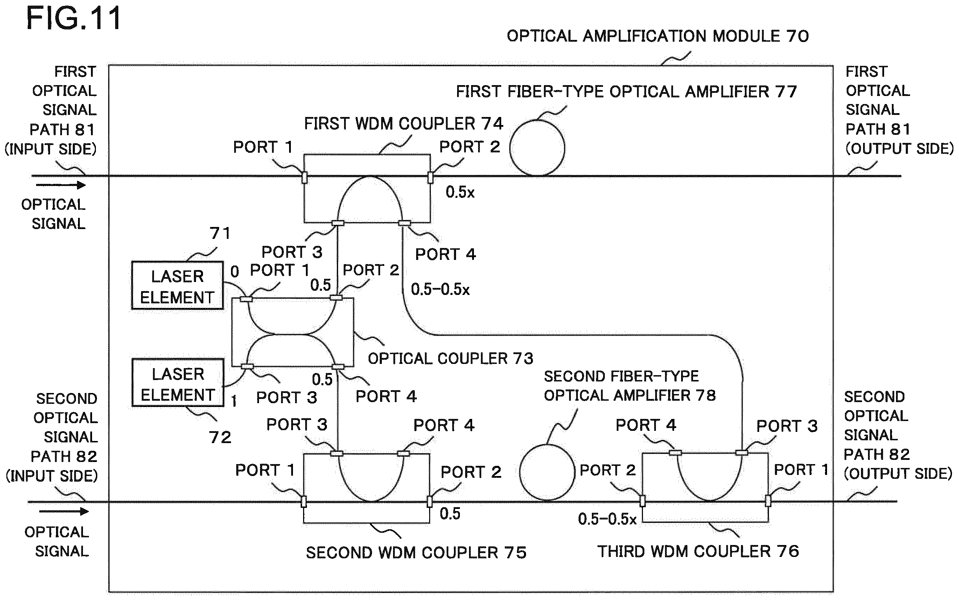

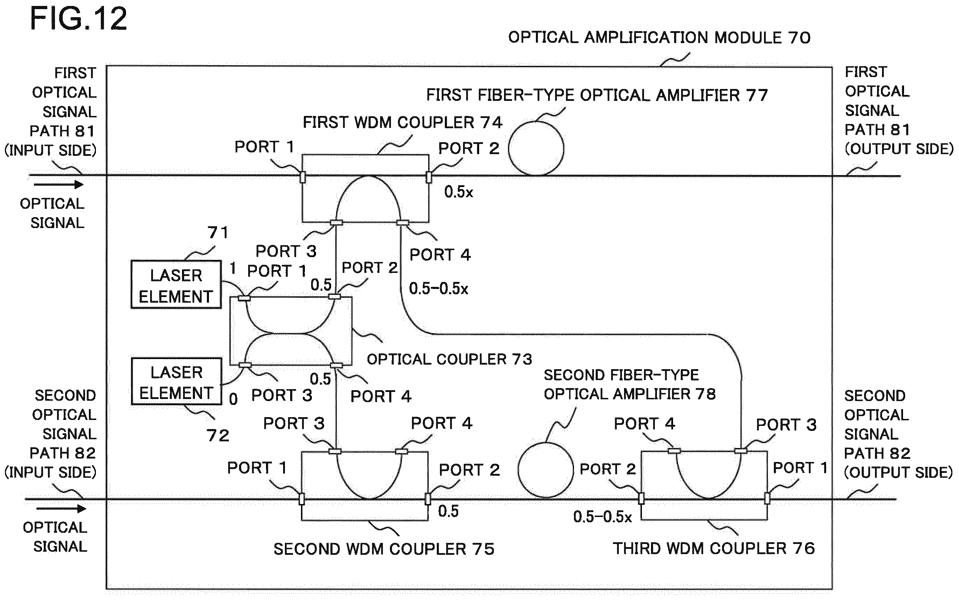

Next, a description will be given on a case where either the first laser element 71 or the second laser element 72 is stopped. FIG. 11 illustrates optical power of excitation light output from each of the regions in a case where the first laser element 71 is stopped. Moreover, FIG. 12 illustrates optical power of excitation light output from each of the regions in a case where the second laser element 72 is stopped.

FIG. 11 illustrates the excitation light output from the stopped first laser element 71 as 0, and the optical power of the excitation light output from the operating second laser element 72 as 1. FIG. 12 illustrates the excitation light output from the stopped second laser element 72 as 0, and the optical power of the excitation light output from the operating first laser element 71 as 1. The optical coupler 73 splits the excitation light, which is input thereto, in such a way that the optical power ratio becomes 1:1, and accordingly, excitation light with optical power of 0.5 is sent to each of the first WDM coupler 74 and the second WDM coupler 75.

The first WDM coupler 74 splits the input excitation light in the ratio of x:1-x, and accordingly, excitation light with optical power of 0.5x is sent to the first fiber-type optical amplifier 77. Hence, the first fiber-type optical amplifier 77 amplifies the optical signal by the excitation light with the optical power of 0.5x, and accordingly, amplifies the optical signal by excitation light with optical power that is half of the optical power in the case where the two laser elements operate. Moreover, excitation light with optical power of 0.5-0.5x is sent to the third WDM coupler. Hence, the third WDM coupler sends the excitation light with the optical power of 0.5-0.5x to the second fiber-type optical amplifier 78.

The second WDM coupler 75 couples all the input excitation light to the optical signal, and outputs this excitation light, and accordingly, couples the excitation light with the optical power of 0.5x to the optical signal, and sends this excitation light to the second fiber-type optical amplifier 78. Hence, the second fiber-type optical amplifier 78 receives excitation light with optical power of totally 1-0.5x from both directions. Moreover, when the two laser elements operate, a sum of the optical power of the pieces of excitation light, which are input to the second fiber-type optical amplifier 78, is 2-x. Hence, also in the second fiber-type optical amplifier 78, the optical signal is amplified by excitation light with optical power that is half of the optical power in the case where the two laser elements operate. As described above, the optical amplification module 70 of the present example embodiment is able to continue to amplify two optical signals even in the case where either of the laser elements is stopped.

The optical amplification module 70 of the present example embodiment makes the laser elements redundant, and accordingly, is able to continue to amplify the optical signals, which are input from two paths, even in the case where either of the laser elements is stopped. Moreover, the optical amplification module 70 supplies the pieces of excitation light from two laser elements, and accordingly, is able to prevent an influence of output variations in the case where two laser elements are operating. Therefore, the optical amplification module 70 of the present example embodiment is able to stably amplify optical signals by making efficient use of excitation light.

In each of the example embodiments, the WDM coupler to which the excitation light split from the first WDM coupler is input outputs all the input excitation light to the path connected to the fiber-type optical amplifier. In place of such a configuration, the excitation light input from the first WDM coupler may be further split and output to the path connected to the fiber-type optical amplifier. A configuration becomes in such a way as to be further split, whereby the amplification amounts can be optimized by adjusting the pieces of excitation light input to the fiber-type optical amplifiers. In the case where the excitation light is further split, the split excitation light may be inserted into the path connected to the fiber-type optical amplifier, and the split excitation light does not have to be used for the amplification.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2017-047432, filed on March 1, 2017, the disclosure of which is incorporated herein in its entirety by reference.

### [Reference signs List]

- 1: Optical output means
- 2: First optical coupling/splitting means
- 3: First optical amplifying means
- 10: Optical amplification module
- 11: Laser element
- 12: First WDM coupler
- 13: Second WDM coupler
- 14: First fiber-type optical amplifier
- 15: Second fiber-type optical amplifier
- 21: First optical signal path
- 22: Second optical signal path
- 30: Optical amplification module
- 31: Laser element
- 32: First WDM coupler
- 33: Second WDM coupler
- 34: First fiber-type optical amplifier
- 35: Second fiber-type optical amplifier
- 41: Optical signal path
- 50: Optical amplification module
- 51: Laser element
- 52: First WDM coupler
- 53: Second WDM coupler
- 54: Fiber-type optical amplifier
- 61: Optical signal path
- 70: Optical amplification module
- 71: First laser element
- 72: Second laser element
- 73: Optical coupler
- 74: First WDM coupler
- 75: Second WDM coupler
- 76: Third WDM coupler
- 77: First fiber-type optical amplifier
- 78: Second fiber-type optical amplifier
- 81: First optical signal path
- 82: Second optical signal path

## Claims

1. An optical amplification module comprising:
an optical output means for outputting light with a predetermined wavelength as excitation light;
a first optical coupling/splitting means for splitting the excitation light to a first excitation light and a second excitation light in such a way that an optical power ratio of first excitation light and second excitation light becomes a predetermined ratio, coupling the first excitation light to a first optical signal and outputting the coupled first excitation light, and outputting the second excitation light to a path different from a path of the first optical signal; and
a first optical amplifying means for amplifying the first optical signal, based on the excitation light coupled to the first optical signal, and outputting the amplified first optical signal.

2. The optical amplification module according to claim 1, further comprising:
a second optical coupling/splitting means for coupling and outputting the second excitation light output from the first optical coupling/splitting means and a second optical signal; and
a second optical amplifying means for amplifying the second optical signal, based on the second excitation light coupled to the second optical signal, and outputting the amplified second optical signal.

3. The optical amplification module according to claim 1, further comprising
a second optical coupling/splitting means for inputting the second excitation light to a transmission path of the first optical signal output from the first optical amplifying means.

4. The optical amplification module according to claim 3, wherein
the first optical amplifying means amplifies the first optical signal, based on the first excitation light coupled to the first optical signal and the second excitation light sent from the second optical coupling/splitting means from an opposite direction of the first optical signal.

5. The optical amplification module according to claim 1, further comprising:
an optical splitting means for coupling a plurality of the excitation lights input from a plurality of the optical output means, splitting the coupled excitation light to a first light and a second light in such a way that optical power of the first light and the second light become equal to each other, and outputting the first light and the second light;
a second optical coupling/splitting means for coupling and outputting the second light and a second optical signal; and
a second optical amplifying means for amplifying the second optical signal, based on the second light coupled to the second optical signal, and outputting the amplified second optical signal, wherein
the first optical coupling/splitting means splits the first light, as the excitation light, to the first excitation light and the second excitation light, and
the second optical amplifying means amplifies the second optical signal, based on the second light and the second excitation light.

6. The optical amplification module according to claim 5, wherein
the second optical amplifying means amplifies the second optical signal, based on the second light and the second excitation light, which are input from an opposite direction of each other.

7. An optical amplification method comprising:
outputting light with a predetermined wavelength as excitation light;
splitting the excitation light to first excitation light and second excitation light in such a way that an optical power ratio of a first excitation light and a second excitation light becomes a predetermined ratio, coupling the first excitation light to a first optical signal and outputting the coupled first excitation light, and outputting the second excitation light to a path different from a path of the first optical signal being coupled the first excitation light; and
amplifying the first optical signal, based on the first excitation light coupled to the first optical signal, and outputting the amplified first optical signal.

8. The optical amplification method according to claim 7, further comprising:
coupling and outputting the second excitation light and a second optical signal; and
amplifying the second optical signal, based on the second excitation light coupled to the second optical signal, and outputting the amplified second optical signal.

9. The optical amplification method according to claim 7, further comprising
amplifying the first optical signal, based on the first excitation light coupled to the first optical signal and the second excitation light sent from an opposite direction of the first optical signal.

10. The optical amplification method according to claim 7, further comprising:
coupling each of a plurality of the excitation lights, splitting the coupled excitation light to first light and second light in such a way that optical power of the first light and the second light become equal to each other, and outputting the first light and the second light;
splitting the first light as the excitation light to the first excitation light and the second excitation light;
coupling and outputting the second light and the second optical signal; and
amplifying the second optical signal, based on the second light coupled to the second optical signal and the second excitation light.
